# EUROPEAN PATENT APPLICATION

(11) **EP 4 675 012 A1**
(43) Date of publication of application: **07.01.2026**
(21) Application number: 23931737.3
(22) Date of filing: 19.09.2023
(51) Int. Cl.: C25B 15/02, C25B 1/02

(54) **HYDROGEN PRODUCTION SYSTEM AND CONTROL METHOD THEREFOR**

(30) Priority: 04.04.2023 CN 202310368782
(71) Applicant: Sungrow Hydrogen Sci.&Tech. Co., Ltd., Hefei 230088, Anhui (CN)
(72) Inventor: LI, Jiangsong, Hefei, Anhui 230088 (CN); SUN, Longlin, Hefei, Anhui 230088 (CN); YANG, Xiaowei, Hefei, Anhui 230088 (CN); ZHANG, Can, Hefei, Anhui 230088 (CN)
(74) Representative: Rooney, John-Paul
(86) International application number: PCT/CN2023/119627
(87) International publication number: WO 2024/207689

(57) **Abstract**

The present invention relates to a hydrogen production system and a control method therefor. The method comprises: determining operation parameter information of the hydrogen production system according to output information of a new energy power generation device; and, according to the operation parameter information and operation demand information of the hydrogen production system, selecting a switching-on mode and a switching-off mode from amongst a plurality of preset modes of hydrogen production units of the hydrogen production system. On the basis of the output information of the new energy power generation device and the operation conditions of the hydrogen production system, the present invention performs selection of switching-on and switching-off of the hydrogen production units, thus improving the operation efficiency of the hydrogen production system.

## Description

The present application claims priority to Chinese Patent Application No.202310368782.3, titled "HYDROGEN PRODUCTION SYSTEM AND CONTROL METHOD THEREFOR", filed on April 04, 2023 with the China National Intellectual Property Administration, which is incorporated herein by reference in its entirety.

### FIELD

The present disclosure relates to the technical field of hydrogen production, and in particular to a hydrogen production system and a control method for the hydrogen production system.

### BACKGROUND

In a conventional constant-power hydrogen production process, starting and stopping of electrolyzers are mostly manually controlled by operators according to production plans. However, for a hydrogen production system with renewable energy, due to fluctuation and intermittency of a renewable energy input, the starting and stopping of the electrolyzer during the constant-power hydrogen production process results in a decrease in the operation efficiency of the hydrogen production system.

### SUMMARY

A hydrogen production system and a control method for the hydrogen production system are provided according to the present disclosure, which improves the operation efficiency of the hydrogen production system with renewable energy by controlling the starting and stopping of a hydrogen production unit.

In order to achieve the above objectives, the following technical solutions are provided according to the present disclosure.

A control method for a hydrogen production system is provided according to the present disclosure, and includes:
determining operation parameter information of the hydrogen production system based on output information of a renewable energy power generation apparatus; and
determining a starting mode and a stopping mode from multiple preset modes of hydrogen production units in the hydrogen production system based on the operation parameter information and operation demand information of the hydrogen production system.

In an embodiment, the multiple preset modes include a first starting mode, a second starting mode and a third starting mode.

In the first starting mode, the hydrogen production units in the hydrogen production system are started simultaneously.

In the second starting mode, the hydrogen production units in the hydrogen production system are started one by one.

In the third starting mode, at least two of the hydrogen production units in the hydrogen production system are started simultaneously.

In an embodiment, the determining the starting mode based on the operation parameter information and the operation demand information of the hydrogen production system includes: determining the starting mode based on an input electrical parameter of the hydrogen production system and a hot standby demand of the hydrogen production system.

In an embodiment, the determining the starting mode based on the input electrical parameter of the hydrogen production system and the hot standby demand of the hydrogen production system includes:
determining, in response to the hydrogen production system having the hot standby demand, the starting mode as the first starting mode or the third starting mode based on the input electrical parameter of the hydrogen production system; and
determining, in response to the hydrogen production system having no hot standby demand, the starting mode as the second starting mode.

In an embodiment, the determining the starting mode as the first starting mode or the third starting mode based on the input electrical parameter of the hydrogen production system includes:
in a case that the input electrical parameter of the hydrogen production system is greater than a preset input electrical parameter of the hydrogen production system, determining starting mode as the first starting mode; and
in a case that the input electrical parameter of the hydrogen production system is less than or equal to the preset input electrical parameter of the hydrogen production system, determining the starting mode as the third starting mode.

In an embodiment, the multiple preset modes further include a first stopping mode and a second stopping mode.
in the first stopping mode, a hydrogen production unit of the hydrogen production units is stopped when an input electrical parameter of the hydrogen production system decreases to a first operating limit; and
in the second stopping mode, a hydrogen production unit of the hydrogen production units is stopped when the input electrical parameter of the hydrogen production system decreases to a second operating limit,
where the first operating limit is greater than the second operating limit.

In an embodiment, the determining the stopping mode based on the operation parameter information and the operation demand information of the hydrogen production system includes: determining the stopping mode based on a fluctuation of the input electrical parameter of the hydrogen production system and a hot standby demand of the hydrogen production system.

In an embodiment, the determining the stopping mode based on the fluctuation of the input electrical parameter of the hydrogen production system and the hot standby demand of the hydrogen production system includes: determining the stopping mode as the first stopping mode in response to the hydrogen production system having no hot standby demand and a difference between input electrical parameters of the hydrogen production system at successive time instants being less than a first preset difference.

In an embodiment, the determining the stopping mode based on the fluctuation of the input electrical parameter of the hydrogen production system and the hot standby demand of the hydrogen production system includes: determining the stopping mode as the second stopping mode in response to the hydrogen production system having the hot standby demand and a difference between input electrical parameters of the hydrogen production system at successive time instants being greater than a second preset difference.

A hydrogen production system is further provided according to the present disclosure, and includes a controller and at least one hydrogen production unit, where starting and stopping of the at least one hydrogen production unit are controlled by the controller; and the controller is configured to perform the control method for the hydrogen production system described above.

In an embodiment, the at least one hydrogen production unit each includes at least one electrolyzer, where starting and stopping of the at least one electrolyzer are controlled by the controller.

In an embodiment, the at least one hydrogen production unit each further includes at least one gas-liquid separator, where one gas-liquid separator is connected to the at least one electrolyzer.

In an embodiment, the at least one hydrogen production unit each further includes a hydrogen production power supply, where an input end of the hydrogen production power supply is connected to a renewable energy power generation apparatus, and an output end of the hydrogen production power supply is connected to the at least one electrolyzer.

From the above technical solution, it can be seen that a hydrogen production system and a control method for the hydrogen production system are provided according to the present disclosure. The operation parameter information of the hydrogen production system is determined based on the output information of the renewable energy power generation apparatus, and a starting mode and a stopping mode are determined from the multiple preset modes of the hydrogen production units in the hydrogen production system based on the operation parameter information and operation demand information of the hydrogen production system. On the basis of the output information of the renewable energy power generation apparatus and operation conditions of the hydrogen production system, starting and stopping of the hydrogen production units are determined in the present disclosure, thus improving the operation efficiency of the hydrogen production system.

In addition, a product implementing the present disclosure does not necessitate all the above-mentioned advantages at the same time.

### BRIEF DESCRIPTION OF THE DRAWINGS

For more clearly illustrating technical solutions in embodiments of the present disclosure or in the conventional technology, drawings referred to for describing the embodiments or the conventional technology are briefly described hereinafter. Apparently, the drawings in the following description are only some embodiments of the present disclosure, and for those skilled in the art, other drawings may be obtained based on the provided drawings without any creative efforts.
FIG. 1 is a flow chart of a control method for a hydrogen production system according to an embodiment of the present disclosure;
FIG. 2(a) is a schematic diagram of a first starting mode according to an embodiment of the present disclosure;
FIG. 2(b) is a schematic diagram of a second starting mode according to an embodiment of the present disclosure;
FIG. 2(c) is a schematic diagram of a third starting mode according to an embodiment of the present disclosure;
FIG. 3(a) is a schematic diagram of a first stopping mode according to an embodiment of the present disclosure;
FIG. 3(b) is a schematic diagram of a second stopping mode according to an embodiment of the present disclosure;
FIG. 4(a) is a schematic diagram of a stopping mode according to another embodiment of the present disclosure;
FIG. 4(b) is a schematic diagram of a stopping mode according to another embodiment of the present disclosure;
FIG. 5 is a schematic diagram of starting and stopping of a hydrogen production unit according to an embodiment of the present disclosure;
FIG. 6(a) is a schematic diagram of starting and stopping of a hydrogen production unit according to another embodiment of the present disclosure;
FIG. 6(b) is a schematic diagram of starting and stopping of a hydrogen production unit according to another embodiment of the present disclosure; and
FIG. 7 is a schematic structural diagram of a hydrogen production system according to an embodiment of the present disclosure.

### DETAILED DESCRIPTION

The technical solutions according to the embodiments of the present disclosure are described clearly and completely as follows in conjunction with the drawings in the embodiments of the present disclosure. It is apparent that the described embodiments are only some of the embodiments according to the present disclosure, rather than all the embodiments. All other embodiments obtained by those skilled in the art based on the embodiments of the present disclosure without any creative work fall within the protection scope of the present disclosure.

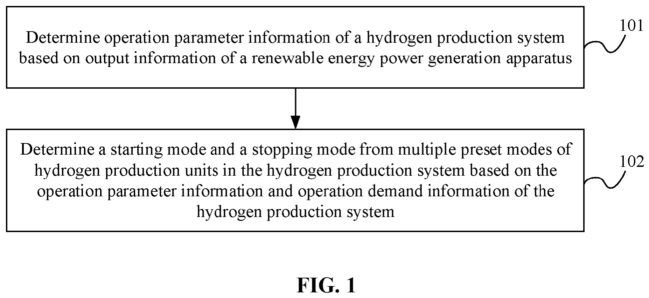

A control method for a hydrogen production system is provided according to the present disclosure. As shown in FIG. 1, the control method includes step 101 to step 102.

In step 101, operation parameter information of the hydrogen production system is determined based on output information of a renewable energy power generation apparatus.

In step 102, a starting mode and a stopping mode are determined from multiple preset modes of hydrogen production units in the hydrogen production system based on the operation parameter information and operation demand information of the hydrogen production system.

The renewable energy power generation apparatus can supply electrical energy to the hydrogen production system. The output information of the renewable energy power generation apparatus may include an output power and a power fluctuation of the renewable energy power generation apparatus. Certainly, the output information of the renewable energy power generation apparatus may include an output current and a current fluctuation of the renewable energy power generation apparatus, which is not limited in the present disclosure. The operation parameter information of the hydrogen production system may be determined based on the output information of the renewable energy power generation apparatus. For example, when the output power of the renewable energy power generation apparatus increases, an input power of the hydrogen production system increases accordingly; and when the output power of the renewable energy power generation apparatus decreases, the input power of the hydrogen production system decreases accordingly. When a fluctuation of the output power of the renewable energy power generation apparatus is large, a fluctuation of the input power of the hydrogen production system is also large; and when a fluctuation of the output power of the renewable energy power generation apparatus is small, a fluctuation of the input power of the hydrogen production system is also small. In the present disclosure, starting and stopping of the electrolyzer of each hydrogen production unit in the hydrogen production system are controlled based on fluctuations and of the output of the renewable energy power generation apparatus, which ensures safe and efficient operation of the hydrogen production system.

The operation parameter information and the operation demand information of the hydrogen production system may be taken into account in the control of starting and stopping of the electrolyzers. The operation parameter information of the hydrogen production system may include, but is not limited to, an input electrical parameter of the hydrogen production system and a fluctuation characteristic of the input electrical parameter of the hydrogen production system. The input electrical parameter of the hydrogen production system may be a hydrogen production input power or a hydrogen production input current; and the fluctuation characteristic of the input electrical parameter of the hydrogen production system may be an input power fluctuation characteristic of the hydrogen production system or an input current fluctuation characteristic of the hydrogen production system, which is not limited in the present disclosure. The operation demand information of the hydrogen production system may include, but is not limited to, a hot standby demand of the hydrogen production system and a limit on the number of start-stop cycles of the electrolyzers.

When the operation parameter information of the hydrogen production system is determined, the output information of the renewable energy power generation apparatus may be obtained based on predicted output data of the renewable energy power generation apparatus, and then the operation parameter information of the hydrogen production system may be determined based on the output information of the renewable energy power generation apparatus. For example, the output power and the power fluctuation of the renewable energy power generation apparatus may be obtained based on a power prediction curve of the renewable energy power generation apparatus, and the input power of the hydrogen production system may be determined based on the output power of the renewable energy power generation apparatus. Based on the input power of the hydrogen production system, the starting mode and the stopping mode of the hydrogen production units may be determined, so that an operating load of the hydrogen production system matches the output of the renewable energy power generation apparatus. Additionally, determining the starting mode and the stopping mode of the hydrogen production units based on the fluctuation of the output power of the renewable energy power generation apparatus can improve the operation efficiency of the hydrogen production system. Further, the operation parameter information of the hydrogen production system may be determined based on historical output data from the renewable energy power generation apparatus to primarily determine the starting mode and the stopping mode the hydrogen production units. Subsequently, the operation parameter information of the hydrogen production system may be corrected based on actual output data from the renewable energy power generation apparatus to adjust the starting mode and stopping mode of the hydrogen production units.

When the hot standby demand of the hydrogen production system is taken into account, the hydrogen production system should start as many hydrogen production units as possible to reduce the number of times of start-stop cycles of the electrolyzers, which ensures that the entire hydrogen production system is in a hot standby state, achieving rapid startup of the electrolyzers, and improving the energy utilization of the hydrogen production system. Reducing the number of start-stop cycles of the electrolyzers is conducive to extending the service life of the electrolyzers.

In the present disclosure, the starting mode and the stopping mode of the hydrogen production units are determined based on the operation parameter information and the operation demand information, which adapts to the fluctuations and intermittency of the output of the renewable energy power generation apparatus, and is conducive to improving the operation efficiency of the hydrogen production system.

In an embodiment, the preset modes in step 102 shown in FIG. 1 may include at least three starting modes, and these starting modes are as follows.

A first starting mode: all hydrogen production units in the hydrogen production system are started simultaneously.

A second starting mode: the hydrogen production units in the hydrogen production system are started one by one.

A third starting mode: at least two hydrogen production units in the hydrogen production system are started simultaneously.

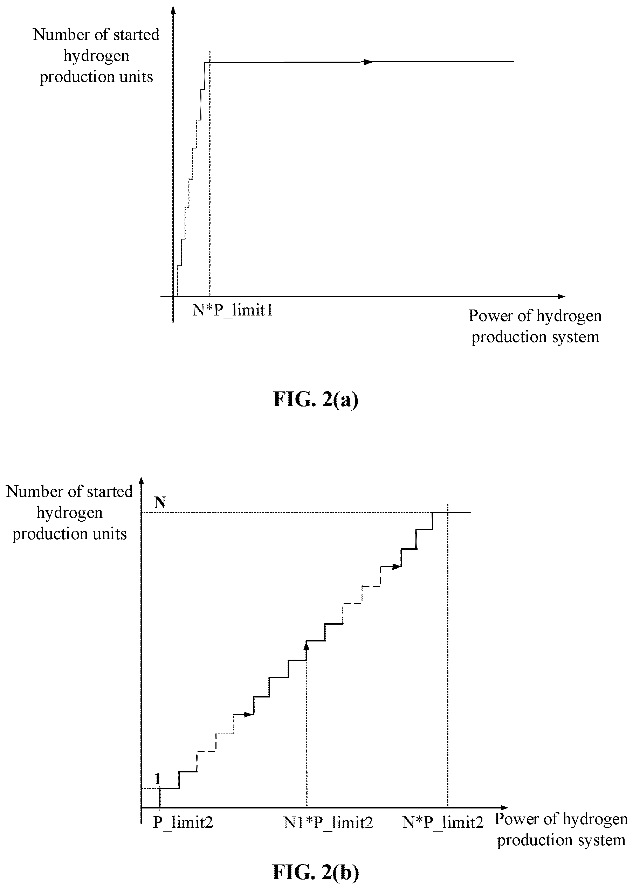

In the first starting mode, as shown in FIG. 2(a), when power or current is inputted, all the hydrogen production units in the hydrogen production system are started to operate. For the ease of description, the following description is made with an example where the power is inputted. Each of the hydrogen production units may operate at a first power limit P_limit1. This first power limit may be a minimum power limit for the hydrogen production unit, and may be a minimum operating power of the electrolyzer. The total number of the hydrogen production units in the hydrogen production system is N. In the first starting mode, all the hydrogen production units are started simultaneously, and the power of the hydrogen production system is N×P_limit1. As the power of the hydrogen production system increases, the power of the hydrogen production units gradually increases, with the power of each of the hydrogen production units not exceeding a rated power of the hydrogen production unit. The power of the hydrogen production system may be distributed among the hydrogen production units in an equal distribution manner or a weighted distribution manner, which is not limited here.

In the second starting mode, as shown in FIG. 2(b), when power is inputted, the hydrogen production units in the hydrogen production system are started one by one, and an activated hydrogen production unit that includes an already operating electrolyzer may be started preferentially. When the hydrogen production unit reaches a second power limit P_limit2, a next hydrogen production unit is started. In an embodiment, the second power limit P_limit2 is greater than the first power limit P_limit1. The second power limit may be a maximum power limit for the hydrogen production unit, and may be a maximum operating power of the electrolyzer. As the number of started hydrogen production units increases, the power of the hydrogen production system gradually increases. When N1 hydrogen production units are started, where N1<N. Each hydrogen production unit operates at the second power limit P_limit2, the power of the hydrogen production system is N1×P_limit2. When all the hydrogen production units in the hydrogen production system are started one by one, and each hydrogen production unit operates at the second power limit P_limit2, the power of the hydrogen production system is N×P_limit2.

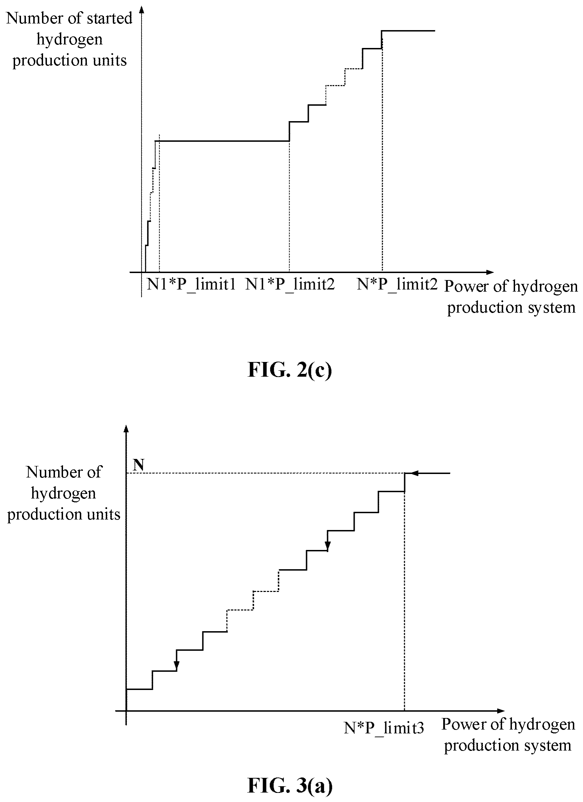

In the third starting mode, there are two starting manners. In the first starting manner, first at least two hydrogen production units in the hydrogen production system are started simultaneously, and then remaining hydrogen production units that are not started in the hydrogen production system are started one by one. In the second starting manner, first some of the hydrogen production units in the hydrogen production system are started one by one, and then at least two hydrogen production units that are not started in the hydrogen production system are started simultaneously. In the first starting manner, as shown in FIG. 2(c), when power is inputted, N1 hydrogen production units in the hydrogen production system are started to operate. Each hydrogen production unit operates at the first power limit P_limit1, in which case the power of the hydrogen production system is N1×P_limit1. As the power of the hydrogen production system increases, the power of the hydrogen production units gradually increases. When the N1 hydrogen production units operate at the second power limit P_limit2, the power of the hydrogen production system is N1×P_limit2. Then the remaining hydrogen production units that are not started in the hydrogen production system are started one by one. When the latest started hydrogen production unit operates at the second power limit P_limit2, a next hydrogen production unit is started. When each hydrogen production unit in the hydrogen production system operates at the second power limit P_limit2, the power of the hydrogen production system is N×P_limit2.

In an embodiment, a method for determining a starting mode based on operation parameter information and operation demand information of the hydrogen production system includes: determining the starting mode based on an input electrical parameter of the hydrogen production system and a hot standby demand of the hydrogen production system.

The input electrical parameter of the hydrogen production system may be a hydrogen production input power or a hydrogen production input current, which is not limited in the present disclosure.

To improve the operation efficiency of the hydrogen production system, on the one hand, the hydrogen production system is required to meet a hot standby demand and start as many hydrogen production units as possible, thus rapidly starting the electrolyzers, improving the energy utilization rate of the hydrogen production system, and further enhancing the operation efficiency of the hydrogen production system. On the other hand, the number of started hydrogen production units may be controlled. The number of started hydrogen production units is reduced under a condition of an identical input electrical parameter of the hydrogen production system such as an identical input power, so that started hydrogen production units operate within an optimal power range, improving hydrogen production efficiency of the electrolyzers, and further enhancing the operation efficiency of the hydrogen production system.

In the present disclosure, a starting mode of the hydrogen production units may be determined based on the input electrical parameter and the hot standby demand of the hydrogen production system. When the input electrical parameter of the hydrogen production system, such as the input power is high, a large number of hydrogen production units are started; and when the input electrical parameter of the hydrogen production system, such as the input power is low, a small number of hydrogen production units are started. Additionally, a starting mode may be determined based on whether the hydrogen production system has a hot standby demand, to meet an operation efficiency requirement for the hydrogen production system.

In an embodiment, determining the starting mode based on the input electrical parameter of the hydrogen production system and the hot standby demand of the hydrogen production system includes:
determining, in response to the hydrogen production system having the hot standby demand, the starting mode as the first starting mode or the third starting mode based on the input electrical parameter of the hydrogen production system; and
determining, in response to the hydrogen production system having no hot standby demand, the starting mode as the second starting mode.

When the hot standby demand of the hydrogen production system is taken into account, the electrolyzers of the hydrogen production units are in a hot standby state, so that the electrolyzers can be rapidly started, improving the operation efficiency of the hydrogen production system. Furthermore, the starting mode of the hydrogen production units may be determined based on the input electrical parameter of the hydrogen production system, and the operation efficiency of the hydrogen production system can be further improved by controlling the number of started hydrogen production units. If the input electrical parameter of the hydrogen production system is large, a first number of hydrogen production units may be started; and if the input electrical parameter of the hydrogen production system is small, a second number of hydrogen production units may be started, where the first number is greater than the second number. Determining the starting mode based on the input electrical parameter of the hydrogen production system can reduce the number of start-stop cycles of the electrolyzers, extends the service life of the electrolyzers, and improves the hydrogen production efficiency of the electrolyzers.

When the hot standby demand of the hydrogen production system is not taken into account, the hydrogen production system may include multiple hydrogen production units, and each hydrogen production unit may include one electrolyzer, with no heat being recycled in this case. To improve the operation efficiency of the hydrogen production system, the number of started hydrogen production units can be controlled to enhance operation efficiency of the hydrogen production system. Furthermore, the starting mode may be determined as the second starting mode, as shown in FIG. 2(b), where the hydrogen production units in the hydrogen production system are started one by one. In this way, after the operating power of one hydrogen production unit reaches the second power limit, a next hydrogen production unit may be started if the power of the hydrogen production system is still to be increased. Compared with starting multiple hydrogen production units simultaneously, starting the hydrogen production units one by one can reduce the number of started hydrogen production units under a condition of an identical input electrical parameter of the hydrogen production system, such as an identical input power of the hydrogen production system, improving the hydrogen production efficiency of the electrolyzers, and further enhancing the operation efficiency of the hydrogen production system. When the hydrogen production system has no hot standby demand, the starting mode may be preferentially determined as the second starting mode. Alternatively, the starting mode may be determined as the third starting mode or the first starting mode based on an actual operation condition of the hydrogen production system, which is not limited here.

In an embodiment, determining the starting mode as the first starting mode or the third starting mode based on the input electrical parameter of the hydrogen production system includes:
in a case that the input electrical parameter of the hydrogen production system is greater than a preset input electrical parameter of the hydrogen production system, determining the starting mode as the first starting mode; and
in a case that the input electrical parameter of the hydrogen production system is less than or equal to the preset input electrical parameter of the hydrogen production system, determining the starting mode as the third starting mode.

When a capacity ratio of the renewable energy power generation apparatus to the hydrogen production system is high, for example, when the output power of the renewable energy power generation apparatus is above half the load of the hydrogen production system for most of the time, the starting mode may be determined as the first starting mode, as shown in FIG. 2(a), that is, all the hydrogen production units of the hydrogen production system are started. When a current input power of the hydrogen production system is above 50% of a rated power of the hydrogen production system, all the hydrogen production units being in an operating state can quickly meet a hydrogen production requirement. Compared with a case that some of the hydrogen production units are in the operating state and another hydrogen production unit is controlled to be in the operating state to meet the hydrogen production requirement, the first starting mode can improve the overall operation efficiency of the hydrogen production system. Certainly, in a case that the input electrical parameter of the hydrogen production system is greater than the preset input electrical parameter of the hydrogen production system, the starting mode may be preferentially determined as the first starting mode. Alternatively, the starting mode may be determined as the third starting mode or the second starting mode based on an actual operation condition of the hydrogen production system, which is not limited here.

When the ratio capacity of the renewable energy power generation unit to the hydrogen production system is low, for example, when the output of the renewable energy power generation unit is below half the load of the hydrogen production system for most of the time, the starting mode may be determined as the third starting mode, as shown in FIG. 2(c), that is, some of the hydrogen production units in the hydrogen production system are started simultaneously, and then remaining hydrogen production units are started one by one when the input power of the hydrogen production system increases. When the current input power of the hydrogen production system is below 50% of the rated power of the hydrogen production system, some of the hydrogen production units being in the operating state can quickly meet the hydrogen production requirement. Compared with starting all the hydrogen production units, the number of start cycles of the electrolyzers is reduced, and the service life of the electrolyzers is extended. In addition, the number of started hydrogen production units is reduced under a condition of an identical input electrical parameter of the hydrogen production system, such as an identical input power of the hydrogen production system, improving the operation efficiency of the electrolyzers, thus enhancing the overall operation efficiency of the hydrogen production system. Certainly, in a case that the input electrical parameter of the hydrogen production system is less than or equal to the preset input electrical parameter, the starting mode may be determined as the third starting mode preferentially. Alternatively, the starting mode may be determined as the first starting mode or the second starting mode based on an actual operation condition of the hydrogen production system, which is not limited here.

In an embodiment, the preset modes shown in step 102 of FIG. 1 may include at least two stopping modes, and these stopping modes are as follows.

A first stopping mode: a hydrogen production unit of the hydrogen production units is stopped when the input electrical parameter of the hydrogen production system decreases to a first operating limit.

A second stopping mode: a hydrogen production unit of the hydrogen production units is stopped when the input electrical parameter of the hydrogen production system decreases to a second operating limit.

The first operating limit is greater than the second operating limit.

For the first stopping mode, as shown in FIG. 3(a), as the input electrical parameter of the hydrogen production system decreases, such as the input power or input current decreases, for the ease of description, the power is taken as an example for illustration below. The input power of the hydrogen production system falls below a first operating limit N×P_limit3, where N represents the number of total hydrogen production units in the hydrogen production system. In this case, the first operating limit may be a power of the hydrogen production system when all the hydrogen production units are operating. Alternatively, the first operating limit may be a power of the hydrogen production system when some of the hydrogen production units are operating. P_limit3 represents a first operating power of the hydrogen production unit, and the first operating power may be identical to the second power limit P_limit2 shown in FIG. 2(b), or the first operating power may be different from the second power limit P_limit2, depending on a power lower limit of the electrolyzer of the hydrogen production units and an actual operating condition. When the input power of the hydrogen production system is within a range [(N-1)×P_limit3, N×P_limit3], one hydrogen production unit is stopped. When the input power of the hydrogen production system is within a range [(N-2)×P_limit3, (N-1)×P_limit3], another hydrogen production unit is stopped. The above process is repeated until the input power of the hydrogen production system decreases to zero.

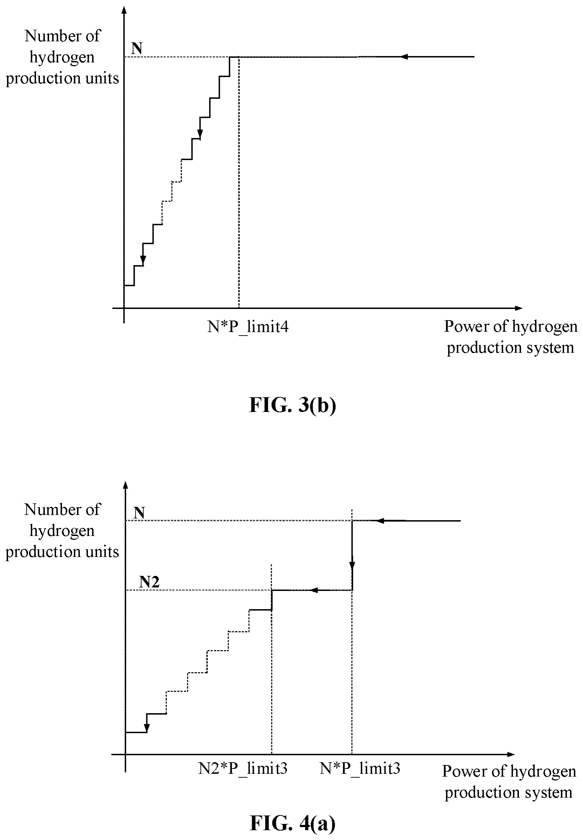

For the second stopping mode, as shown in FIG. 3(b), as the input power decreases, the power of the hydrogen production system falls below a second operating limit N×P_limit4, where N represents the number of total hydrogen production units in the hydrogen production system. In this case, the second operating limit may be a power of the hydrogen production system when all the hydrogen production units are operating. Alternatively, the second operating limit may be a power of the hydrogen production system when some of the hydrogen production units are operating. P_limit4 represents a second operating power of the hydrogen production unit, and the second operating power may be identical to the first power limit P_limit1 shown in FIG. 2(a), or the second operating power may be different from the first power limit P_limit1, depending on a power lower limit of the electrolyzer of the hydrogen production unit and an actual operating condition. The second operating limit N×P_limit4 is less than the first operating limit N×P_limit3. When the input power of the hydrogen production system is within a range [(N-1)×P_limit4, N×P_limit4], one hydrogen production unit is stopped. When the input power of the hydrogen production system is within a range [(N-2)×P_limit4, (N-1)×P_limit4], another hydrogen production unit is stopped. The above process is repeated until the input power of the hydrogen production system decreases to zero.

The first stopping mode is different from the second stopping mode in that the first stopping mode begins to stop hydrogen production units one by one when the input power of the hydrogen production system is large, for example, the hydrogen production units are stopped one by one when the input power of the hydrogen production system is 70% of the rated power of the hydrogen production system, and the second stopping mode begins to stop hydrogen production units one by one when the input power of the hydrogen production system is small, for example, the hydrogen production units are stopped one by one when the input power of the hydrogen production system is 30% of the rated power of the hydrogen production system.

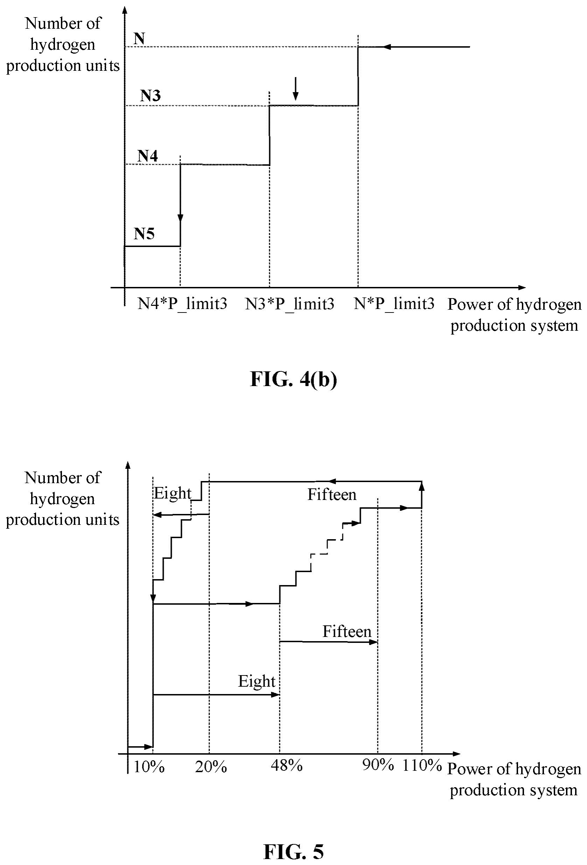

It should be noted that for both the first stopping mode and the second stopping mode, the hydrogen production units may be stopped one by one, as shown in FIG. 3(a) and FIG. 3(b). Alternatively, some of the hydrogen production units may be stopped first, and then the remaining hydrogen production units are stopped one by one, as shown in FIG. 4(a), that is, first some of the hydrogen production units are stopped, and the number of started hydrogen production units decreases from N to N2, in which case the power of the hydrogen production system decreases from N×P_limit3 to N2×P_limit3, where N2<N, and then the remaining hydrogen production units are stopped one by one. Alternatively, some of the hydrogen production units may be stopped as shown in FIG. 4(b), that is, first some of the hydrogen production units are stopped, and the number of started hydrogen production units decreases from N to N3, in which case the power of the hydrogen production system decreases from N×P_limit3 to N3×P_limit3. Then, some of the hydrogen production units are stopped, and the number of the started hydrogen production units decreases from N3 to N4, in which case the power of the hydrogen production system decreases from N3×P_limit3 to N4×P_limit3. Finally, some of the hydrogen production units are stopped, and the number of the started hydrogen production units decreases from N4 to N5. The above process is repeated until the power of the hydrogen production system decreases to zero. Alternatively, first some of the hydrogen production units are stopped one by one and then the remaining hydrogen production units are stopped, which is not described here.

In an embodiment, a method for determining the stopping mode based on the operation parameter information and the operation demand information of the hydrogen production system includes: determining the stopping mode based on a fluctuation of the input electrical parameter of the hydrogen production system and the hot standby demand of the hydrogen production system.

In the present disclosure, the stopping mode for the hydrogen production units may be determined based on the fluctuation of the input electrical parameter of the hydrogen production system and the hot standby demand of the hydrogen production system. In an embodiment, the fluctuation of the input electrical parameter of the hydrogen production system may refer to a fluctuation of the input power of the hydrogen production system or a fluctuation of the input current of the hydrogen production system. When the fluctuation of the input electrical parameter of the hydrogen production system is large, a large number of hydrogen production units may be maintained in an operating state to avoid frequent starting and stopping of the electrolyzers. When the fluctuation of the input electrical parameter of the hydrogen production system is small, the hydrogen production units may be stopped one by one to enhance the hydrogen production efficiency of the electrolyzers. Additionally, the stopping mode may be determined based on whether the hydrogen production system has a hot standby demand, to meet the operation efficiency requirement for the hydrogen production system.

In an embodiment, the determining the stopping mode based on the fluctuation of the input electrical parameter of the hydrogen production system and the hot standby demand of the hydrogen production system includes: determining the stopping mode as the first stopping mode, in response to the hydrogen production system having no hot standby demand and a difference between the input electrical parameters of the hydrogen production system at successive time instants being less than a first preset difference.

When the hot standby demand of the hydrogen production system is not taken into account, the hydrogen production system may include multiple hydrogen production units, and each hydrogen production unit may include one electrolyzer, with no heat being recycled in this case. To improve the operation efficiency of the hydrogen production system, the number of stopped hydrogen production units may be controlled to enhance the operation efficiency of the hydrogen production system. Furthermore, when the fluctuation of the input electrical parameter of the hydrogen production system is small, that is, when the difference between the input electrical parameters of the hydrogen production system at successive time instants is less than the first preset difference, the stopping mode is determined as the first stopping mode. As shown in FIG. 3(a), a hydrogen production unit is stopped when the input electrical parameter of the hydrogen production system, such as the input power of the hydrogen production system, decreases to the first operating limit N×P_limit3, and another hydrogen production unit is stopped when the input power of the hydrogen production system decreases to the first operating limit (N-1)×P_limit3. Compared with a case that a hydrogen production unit is stopped when the input power of the hydrogen production system decreases to the second operating limit N×P_limit4, where P_limit3>P_limit4, the first stopping mode improves the hydrogen production efficiency of the electrolyzers and further enhances the operation efficiency of the hydrogen production system. Also, in a case that the hydrogen production system has no hot standby demand and the fluctuation of the input electrical parameter of the hydrogen production system is small, the stopping mode is determined as the first stopping mode preferentially. Alternatively, the stopping mode is determined as the second stopping mode or stopping modes shown in FIG. 4(a) and FIG. 4(b), depending on an actual operation condition of the hydrogen production system, which is not limited here.

In another embodiment, the determining the stopping mode based on the fluctuation of the input electrical parameter of the hydrogen production system and the hot standby demand of the hydrogen production system includes: determining the stopping mode as the second stopping mode, if the hydrogen production system has the hot standby demand and the difference between the input electrical parameters of the hydrogen production system at successive time instants is greater than a second preset difference

When the hot standby demand of the hydrogen production system is taken into account, the electrolyzers of the hydrogen production units are in a hot standby state, so that the electrolyzers can be rapidly started, improving the operation efficiency of the hydrogen production system. Furthermore, when the fluctuation of the input electrical parameter of the hydrogen production system is large, that is, the difference between the input electrical parameters of the hydrogen production system at successive time instants is greater than the second preset difference, the stopping mode is determined as the second stopping mode. The second preset difference may be identical to the first preset difference, or the second preset difference may be different from the first preset difference. As shown in FIG. 3(b), a hydrogen production unit is stopped when the input electrical parameter of the hydrogen production system, such as the input power of the hydrogen production system, decreases to the second operating limit N×P_limit4. Compared with a case that a hydrogen production unit is stopped when the input power of the hydrogen production system decreases to the first operating limit N×P_limit3, where P_limit3>P_limit4, the second stopping mode can reduce the number of start-stop cycles of the electrolyzers when the fluctuation of the input electrical parameter of the hydrogen production system is large, for example, when the fluctuation of the input power or the input current of the hydrogen production system is large, avoiding frequent starting and stopping of the electrolyzers, improving the operation efficiency of the hydrogen production system, and extending the service life of the electrolyzers. Also, in a case that the hydrogen production system has the hot standby demand and the fluctuation of the input electrical parameter of the hydrogen production system is large, the stopping mode may be determined as the second stopping mode preferentially. Alternatively, the stopping mode may be determined as the first stopping mode or the stopping modes shown in FIG. 4(a) and FIG. 4(b), depending on an actual operation condition of the hydrogen production system, which is not limited here.

In an embodiment, the hydrogen production system includes fifteen hydrogen production units, each hydrogen production unit includes four electrolyzers, and four electrolyzers correspond to one gas-liquid separator. Each hydrogen production unit has a hydrogen production capacity of 4,000Nm³/h, and a rated power of 20MW, and thus the hydrogen production system has a total hydrogen production capacity of 60,000Nm³/h and a total rated power of 300MW. The hydrogen production system has the hot standby demand, the starting mode is determined as the third starting mode based on the input electrical parameter of the hydrogen production system, such as the input power of the hydrogen production system, and the stopping mode is determined as the second stopping mode based on an input electrical parameter of the hydrogen production system, such as a fluctuation of the input power. For the ease of description, the power is taken as an example for illustration. The starting and stopping of the hydrogen production units in the hydrogen production system are shown in FIG. 5 schematically.

When an initial power is inputted, for example, the input power of the hydrogen production system is 10% of the rated power of the hydrogen production system, at least one electrolyzer in each hydrogen production unit operates at approximately 80% of the rated power of the electrolyzer, ensuring the efficiency of a single electrolyzer. An alkali liquor circulation inside the hydrogen production unit enables as many electrolyzers in the hydrogen production unit as possible to be in a hot standby state. As a result, eight hydrogen production units are operating, the input power of the hydrogen production system is equally distributed among the eight hydrogen production units, that is, each hydrogen production unit has a hydrogen production capacity of 750Nm³/h and a power of 3.75MW.

As the input power of the hydrogen production system increases, when the input power of the hydrogen production system exceeds (8×90%×20/300)=48% of the rated power, another hydrogen production unit is started. When the input power of the hydrogen production system exceeds a product of the number of activated hydrogen production units and 90% of the rated power of the hydrogen production unit, another hydrogen production unit is started, and the input power of the hydrogen production system is equally distributed based on the number of the hydrogen production units. For example, when the input power of the hydrogen production system exceeds (9×90%×20/300)=54%, another hydrogen production unit is started, with a total of 10 and each hydrogen production unit operating at 16.2MW. When all the hydrogen production units are started, each hydrogen production unit operates at 90% of the rated power. As the input power of the hydrogen production system increases, the input power of the hydrogen production system is equally distributed among all the hydrogen production units until each of the hydrogen production units operates at full load.

As the input power of the hydrogen production system decreases, the input power of the hydrogen production system is equally distributed among all the hydrogen production units. When the operating power decreases to 20% (at least one electrolyzer in the fifteen hydrogen production units is operating at 80% of the rated power), a hydrogen production unit begins to be stopped, which continues until the input power of the hydrogen production system decreases to 10%, in which case one electrolyzer in eight hydrogen production units is operating at 80% of the rated power, enabling as many electrolyzers in the hydrogen production units as possible to operate in the hot standby state.

As can be seen from the above, a large hysteresis interval is set between the starting limit and stopping limit for the hydrogen production units, which can reduce frequent startup and shutdown during power fluctuations and extend the service life of the electrolyzers. At least one electrolyzer in the hydrogen production units maintains operation, which ensures that the overall hydrogen production system is in the hot standby state, facilitates rapid startup, and improves the energy utilization efficiency of the hydrogen production system, thereby enhancing the operation efficiency of the hydrogen production system.

In another embodiment, the hydrogen production system includes four hydrogen production units, each hydrogen production unit includes one electrolyzer, and each electrolyzer corresponds to one gas-liquid separator. Each hydrogen production unit has a hydrogen production capacity of 1,000Nm³/h and a rated power of 5MW, and thus the hydrogen production system has a total hydrogen production capacity of 4,000Nm³/h and a total rated power of 20MW. This hydrogen production system has no hot standby demand, and the starting mode is determined as the second starting mode.

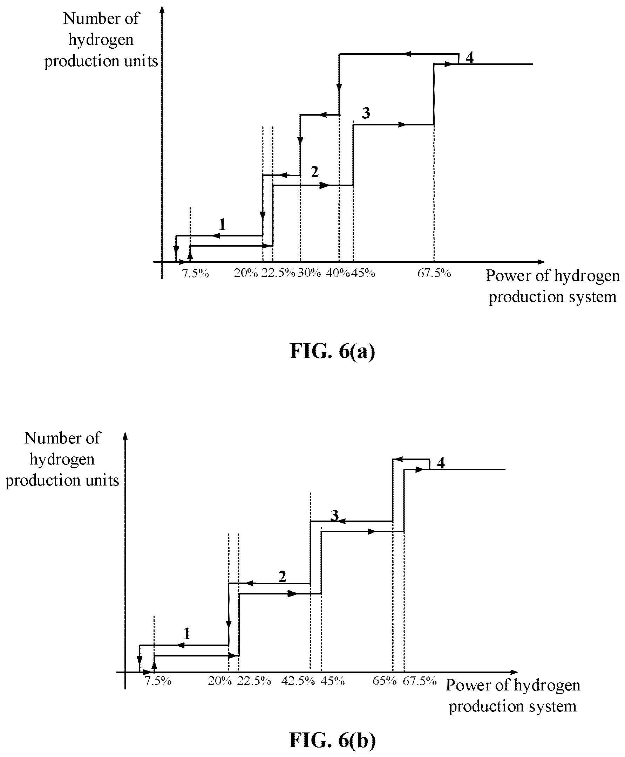

When a fluctuation of the output power of the renewable energy power generation system is large, the starting mode is determined as the second starting mode in order to reduce the number of start-stop cycles of the electrolyzers, as shown in FIG. 6(a).

When the initial power is inputted, for example, the input power of the hydrogen production system is 20% of the rated power of the hydrogen production system, an electrolyzer is started. Another electrolyzer begins to be started when the hydrogen production power of the electrolyzer exceeds 90% of a rated power as the input power of the hydrogen production system increases. When the input power of the hydrogen production system exceeds the product of the number of activated hydrogen production units and 90% of a rated power of the hydrogen production system, another electrolyzer is started, and the input power of the hydrogen production system is equally distributed based on the number of the hydrogen production units. For example, when the input power of the hydrogen production system exceeds (2×90%×5/20)=45%, another electrolyzer is started, with a total of three and each electrolyzer operating at a power of 3MW. When all electrolyzers are started, each electrolyzer operates at 90% of the rated power. As the input power of the hydrogen production system increases, the input power of the hydrogen production system is equally distributed among the electrolyzers until each of the electrolyzers operates at full load.

As the input power of the hydrogen production system decreases, the input power of the hydrogen production system is equally distributed among all the electrolyzers. When the input power of the hydrogen production system decreases to 40% (each electrolyzer operates at 40% of the rated power), an electrolyzer begins to be stopped. When the input power of the hydrogen production system decreases to 30%, another electrolyzer is stopped.

As can be seen from the above, a large hysteresis is set between the starting limit and the stopping limit of the hydrogen production system, which can avoid frequent starting and stopping of the electrolyzers during large-range power fluctuations, extend the service life of the electrolyzers, thus improving the operation efficiency of the hydrogen production system.

When the output power of the renewable energy power generation apparatus is smooth, that is, the fluctuation of the output power is small, the stopping mode is determined as the first stopping mode, as shown in FIG. 6(b).

When the initial power is inputted, for example, the input power of the hydrogen production system is 20% of the rated power of the hydrogen production system, one electrolyzer is started. Another electrolyzer begins to be started when the hydrogen production power of the electrolyzer exceeds 90% of a rated power as the input power of the hydrogen production system increases. When the input power of the hydrogen production system exceeds the product of the number of activated hydrogen production units and 90% of a rated power, another electrolyzer is started, and the input power of the hydrogen production system is equally distributed based on the number of the hydrogen production units. For example, when the input power of the hydrogen production system exceeds (2×4.5/20)=45%, another electrolyzer is started, with a total of three and each electrolyzer operating at a power of 3MW. When all electrolyzers are started, each electrolyzer operates at 90% of the rated power. As the input power of the hydrogen production system increases, the input power of the hydrogen production system is equally distributed among the electrolyzers until each of the hydrogen production units operates at full load.

As the input power of the hydrogen production system decreases, the input power of the hydrogen production system is equally distributed among all the electrolyzers. When the input power of the hydrogen production system decreases to 65%, one electrolyzer is stopped, and the input power of the hydrogen production system is equally distributed among other started electrolyzers, that is, other electrolyzers operate at 20×0.65/3=4.3MW. A hysteresis interval between starting and stopping of each electrolyzer is set at 10%. When the input power of the hydrogen production system decreases to 42.5%, another electrolyzer is stopped, and the rest can be done in the same manner.

As can be seen from the above, when the input power is smooth and there is no frequent power fluctuation, each electrolyzer operates in a high-load range, achieving a high operation efficiency, ensuring a high hydrogen production capacity, and enhancing the overall efficiency of the hydrogen production system.

A hydrogen production system is further provided according to the present disclosure, and includes: a controller and at least one hydrogen production unit. The starting and stopping of the hydrogen production unit are controlled by the controller; and the controller is configured to perform the control method for the hydrogen production system shown in FIG. 1.

In an embodiment, the hydrogen production unit includes: at least one electrolyzer, where starting and stopping of the electrolyzer are controlled by the controller. The starting and stopping of the electrolyzer may be controlled by a switching signal from the controller.

The hydrogen production unit further includes: at least one gas-liquid separator; where one gas-liquid separator is connected to at least one electrolyzer.

The hydrogen production unit further includes a hydrogen production power supply, where an input end of the hydrogen production power supply is connected to a renewable energy power generation apparatus, and an output end of the hydrogen production power supply is connected to the electrolyzer. The starting and stopping of the electrolyzer may further be controlled by the controller via the hydrogen production power supply.

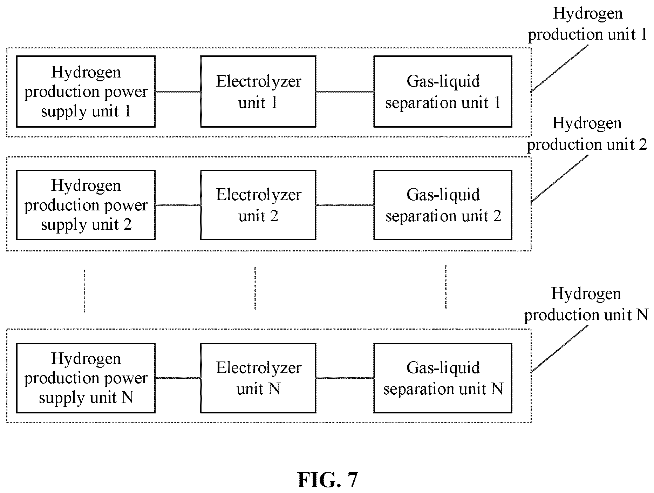

As shown in FIG. 7, FIG. 7 is a structural diagram of the hydrogen production system according to the present disclosure. The hydrogen production system includes a controller (not shown in FIG. 7) and multiple hydrogen production units, with the number of the hydrogen production units being N. Each hydrogen production unit includes a hydrogen production power supply unit, an electrolyzer unit, and a gas-liquid separation unit. One hydrogen production power supply unit may include one or more hydrogen production power supplies, one electrolyzer unit may include one or more electrolyzers, and one gas-liquid separation unit may include one or more gas-liquid separators. One electrolyzer may correspond to one gas-liquid separator, or multiple electrolyzers may correspond to one gas-liquid separator. One electrolyzer may correspond to one hydrogen production power supply. The controller may stops an electrolyzer by switching off the hydrogen production power supply corresponding to the electrolyzer, and the controller may start an electrolyzer by switching on the hydrogen production power supply corresponding to the electrolyzer. Certainly, the starting and the stopping of the electrolyzer may be achieved through a switching signal for the electrolyzer. In FIG. 7, a hydrogen production unit 1 includes a hydrogen production power supply unit 1, an electrolyzer unit 1, and a gas-liquid separation unit 1; a hydrogen production unit 2 includes a hydrogen production power supply unit 2, an electrolyzer unit 2, and a gas-liquid separation unit 2; and a hydrogen production unit N includes a hydrogen production power supply unit N, an electrolyzer unit N, and a gas-liquid separation unit N.

It should be noted that in the present disclosure, relationship terminologies such as "first" and "second" are only used to distinguish one entity or operation from another entity or operation, rather than to necessitate or imply an actual relationship or order between the entities or operations. It should be noted that the terms "comprise", "include", or any other variants thereof are intended to encompass a non-exclusive inclusion, such that a process, article, or device including a series of elements includes not only those elements but also elements that are not explicitly listed, or elements that are inherent to such process, article, or device. Unless expressively limited otherwise, an element defined by the statement "comprising a..." does not exclude a case that additional similar elements are included in the process, article, or device including the element.

The embodiments in the specification are described in a progressive manner, and each embodiment focuses on the difference from other embodiments. Same and similar parts in each embodiment may be referred to each other.

According to the above description of the disclosed embodiments, those skilled in the art can implement or practice the present disclosure. Various modifications to these embodiments are obvious to those skilled in the art, and the general principles defined herein may be implemented in other embodiments without departing from the spirit and scope of the present disclosure. Therefore, the present disclosure is not to be limited to the embodiments shown herein, but is conformed to the widest scope consistent with the principles and novel features disclosed herein.

## Claims

1. A control method for a hydrogen production system, **characterized by** comprising:
determining operation parameter information of the hydrogen production system based on output information of a renewable energy power generation apparatus; and
determining a starting mode and a stopping mode from a plurality of preset modes of hydrogen production units in the hydrogen production system based on the operation parameter information and operation demand information of the hydrogen production system.

2. The control method for the hydrogen production system according to claim 1, wherein the plurality of preset modes comprise a first starting mode, a second starting mode and a third starting mode, wherein
in the first starting mode, the hydrogen production units in the hydrogen production system are started simultaneously;
in the second starting mode, the hydrogen production units in the hydrogen production system are started one by one; and
in the third starting mode, at least two of the hydrogen production units in the hydrogen production system are started simultaneously.

3. The control method for the hydrogen production system according to claim 2, wherein the determining the starting mode based on the operation parameter information and the operation demand information of the hydrogen production system comprises:
determining the starting mode based on the input electrical parameter of the hydrogen production system and a hot standby demand of the hydrogen production system.

4. The control method for the hydrogen production system according to claim 3, wherein the determining the starting mode based on the input electrical parameter of the hydrogen production system and the hot standby demand of the hydrogen production system comprises:
determining, in response to the hydrogen production system having the hot standby demand, the starting mode as the first starting mode or the third starting mode based on the input electrical parameter of the hydrogen production system; and
determining, in response to the hydrogen production system having no hot standby demand, the starting mode as the second starting mode.

5. The control method for the hydrogen production system according to claim 4, wherein the determining the starting mode as the first starting mode or the third starting mode based on the input electrical parameter of the hydrogen production system comprises:
in a case that the input electrical parameter of the hydrogen production system is greater than a preset input electrical parameter of the hydrogen production system, determining the starting mode as the first starting mode; and
in a case that the input electrical parameter of the hydrogen production system is less than or equal to the preset input electrical parameter of the hydrogen production system, determining the starting mode as the third starting mode.

6. The control method for the hydrogen production system according to any one of claims 1 to 5, wherein the plurality of preset modes further comprise a first stopping mode and a second stopping mode, wherein
in the first stopping mode, a hydrogen production unit of the hydrogen production units is stopped when an input electrical parameter of the hydrogen production system decreases to a first operating limit; and
in the second stopping mode, a hydrogen production unit of the hydrogen production units is stopped when the input electrical parameter of the hydrogen production system decreases to a second operating limit,
wherein the first operating limit is greater than the second operating limit.

7. The control method for the hydrogen production system according to claim 6, wherein the determining the stopping mode based on the operation parameter information and the operation demand information of the hydrogen production system comprises:
determining the stopping mode based on a fluctuation of the input electrical parameter of the hydrogen production system and a hot standby demand of the hydrogen production system.

8. The control method for the hydrogen production system according to claim 7, wherein the determining the stopping mode based on the fluctuation of the input electrical parameter of the hydrogen production system and the hot standby demand of the hydrogen production system comprises:
determining the stopping mode as the first stopping mode in response to the hydrogen production system having no hot standby demand and a difference between input electrical parameters of the hydrogen production system at successive time instants being less than a first preset difference.

9. The control method for the hydrogen production system according to claim 7, wherein the determining the stopping mode based on the fluctuation of the input electrical parameter of the hydrogen production system and the hot standby demand of the hydrogen production system comprises:
determining the stopping mode as the second stopping mode in response to the hydrogen production system having the hot standby demand and a difference between input electrical parameters of the hydrogen production system at successive time instants being greater than a second preset difference.

10. A hydrogen production system, **characterized by** comprising:
a controller; and
at least one hydrogen production unit, wherein
starting and stopping of the at least one hydrogen production unit are controlled by the controller; and
the controller is configured to perform the control method for the hydrogen production system according to any one of claims 1 to 9.

11. The hydrogen production system according to claim 10, wherein the at least one hydrogen production unit each comprises at least one electrolyzer,
wherein starting and stopping of the at least one electrolyzer are controlled by the controller.

12. The hydrogen production system according to claim 11, wherein the at least one hydrogen production unit each further comprises at least one gas-liquid separator,
wherein one gas-liquid separator is connected to the at least one electrolyzer.

13. The hydrogen production system according to claim 11 or 12, wherein the at least one hydrogen production unit each further comprises a hydrogen production power supply,
wherein an input end of the hydrogen production power supply is connected to a renewable energy power generation apparatus, and an output end of the hydrogen production power supply is connected to the at least one electrolyzer.
